# EUROPÄISCHE PATENTSCHRIFT

(11) **EP 1 200 284 B1**
(45) Veröffentlichungstag und Bekanntmachung des Hinweises auf die Patenterteilung: **02.01.2004**
(21) Anmeldenummer: 00942121.5
(22) Anmeldetag: 23.06.2000
(51) Int. Cl.: B60K 35/00, B60K 37/06

(54) **MENÜELEMENT AUF EINER ANZEIGEEINRICHTUNG**
MENU ELEMENT PROVIDED ON A DISPLAY DEVICE
ELEMENT A MENUS SUR DISPOSITIF D'AFFICHAGE

(30) Priorität: 06.07.1999 DE 19931152; 03.09.1999 DE 19941964
(43) Veröffentlichungstag der Anmeldung: 02.05.2002
(73) Patentinhaber: Volkswagen Aktiengesellschaft, 38436 Wolfsburg (DE)
(72) Erfinder: LILIENTHAL, Jörg, D-38518 Gifhorn (DE); HEIMERMANN, Matthias, D-38302 Wolfenbüttel (DE)
(86) Internationale Anmeldenummer: PCT/EP2000/005822
(87) Internationale Veröffentlichungsnummer: WO 2001/002207

(56) Entgegenhaltungen:
- DE-A- 19 715 325
- US-A- 5 916 288
- PATENT ABSTRACTS OF JAPAN vol. 1998, no. 13, 30. November 1998 (1998-11-30) -& JP 10 214172 A (YAZAKI CORP), 11. August 1998 (1998-08-11)

## Beschreibung

Die Erfindung betrifft eine Multifunktionsbedieneinrichtung für Kraftfahrzeuge gemäß dem Oberbegriff von Anspruch 1. Eine derartige Einrichtung ist aus Patent Abstracts of Japan, vol. 1998, no 13, JP 10 214 172 A bekannt.

Aufgrund der Vielzahl von zu steuernden Komponenten in einem Kraftfahrzeug, wobei im Normalfall nur eine Anzeigeeinheit zur Darstellung der Eingabeoptionen bzw. der Systemzustände zur Verfügung steht, ist man dazu übergegangen, Menüführungen, wie aus der Computertechnik bekannt, zu verwenden. Allerdings existiert ein sehr großer Unterschied zwischen einer Menüführung in einem Kraftfahrzeug und der Menüführung an einem Personal Computer PC. Während der Nutzer des PCs sich üblicherweise voll auf seine Tätigkeit konzentrieren kann, muß der Kraftfahrzeugführer sich grundsätzlich auf den Straßenverkehr konzentrieren. Die Gefahr bei hierarchischen Menüebenen besteht darin, daß häufig in falsche Menüebenen gewechselt wird, beispielsweise weil sich der Nutzer aufgrund der Informationen in der übergeordneten Menüebene über Sinn und Zweck geirrt hat. Bei PC-Anwendungen ist dies zwar ärgerlich, aber leicht rückgängig zu machen, beispielsweise indem der Nutzer sich durch Maus-Klicken sukzessiv wieder zur Ausgangsmenüebene hocharbeitet. In einem Kraftfahrzeug ist dies aufgrund der jeweils nur begrenzt zur Verfügung stehenden Zeit, bevor sich der Kraftfahrzeugführer wieder um den Straßenverkehr kümmern muß, viel mühseliger und nervenaufreibender.

Der Erfindung liegt daher das technische Problem zugrunde, eine Multifunktions bedicheinrichtung für eine hierarchische Benutzerführung in menügesteuerten Systemen, in einem Kraftfahrzeug, zu schaffen, mittels dessen eine verbesserte Nutzerführung möglich ist.

Die Lösung des technischen Problems ergibt sich durch einen Gegenstand mit den Merkmalen des Patentanspruchs 1. Weitere vorteilhafte Ausgestaltungen der Erfindung ergeben sich aus den Unteransprüchen.

Die Erfindung betrifft eine Multifunktionsbedieneinrichtung, bei der mindestens eine der darstellbaren Menüstrukturen mindestens ein Menüelement aufweist.

Gemäß der Erfindung ist vorgesehen, daß dem Menüelement mindestens ein hierarchisch untergeordnetes Menü- und/oder Funktionselement zugeordnet ist. Bei Aktivierung bzw. Auswahl des Menüelementes ist das mindestens eine hierarchisch untergeordnete Menü- und/oder Funktionselement in Bezug zum übergeordneten Menüelement dargestellt.
Dabei wird gemäß einer bevorzugten Ausbildung dem Menüelement ein hierarchisch untergeordneter Menüträger zugeordnet, auf dem das mindestens eine hierarchisch untergeordnete Menü- und/oder Funktionselement angeordnet ist. Bei Aktivierung des Menüelementes fährt der Menüträger mit den Menüelementen aus und ist in Bezug, das heißt in Sinnfähigkeit zu dem Menüelement angeordnet. Anhand der auf dem Menüträger angeordneten Menüelemente erkennt der Nutzer die Eingabeoptionen, ohne das übergeordnete Menü zu verlassen. Bei richtiger Wahl kann dann der Nutzer die angebotenen Eingabeoptionen wählen oder den Menüträger wieder einfahren. Die Menüträger können beliebig gestaltet sein und beliebig um das Menüelement angeordnet werden. Vorzugsweise ist der Menüträger jedoch als Leiste ausgebildet, die analog einer Schublade aus dem Menüelement gezogen und wieder hineinzuschieben ist.

In einer zweiten bevorzugten Ausführungsform wird das aktivierte Menüelement und/oder die aktivierten Menüelemente auf dem Menüträger optisch hervorgehoben dargestellt.

Die Erfindung wird nachfolgend anhand eines bevorzugten Ausführungsbeispiels näher erläutert. Die einzige Figur zeigt ein Grundmenü mit erfindungsgemäßen Menüelementen.

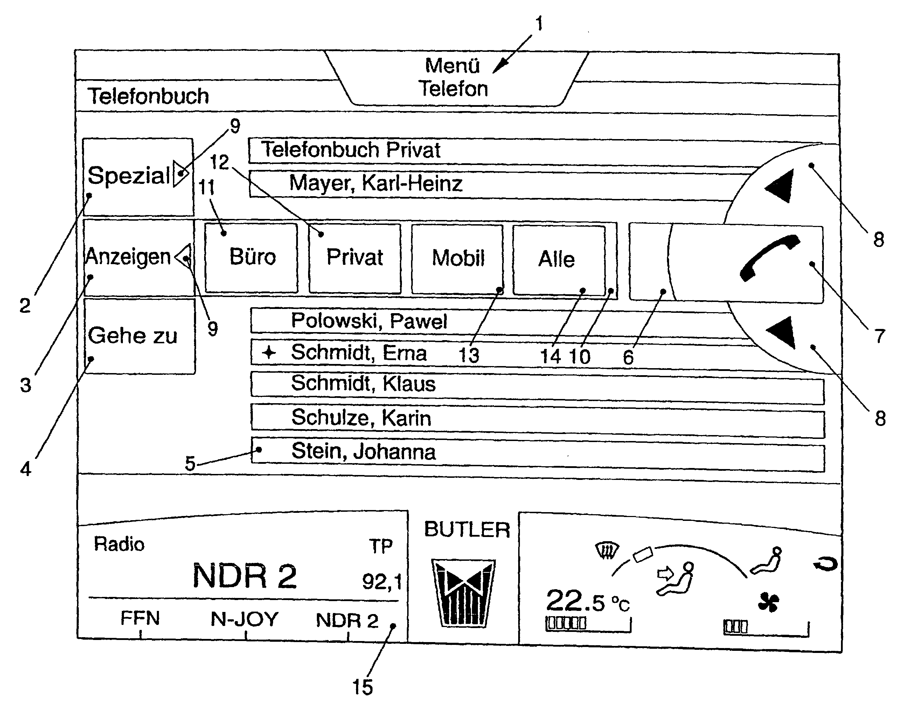

In der Fig. 1 ist ein Grundmenü 1 auf einer Anzeigeeinrichtung 15 für ein Autotelefon dargestellt. Das Grundmenü 1 umfaßt drei Menüelemente 2-4, wobei im dargestellten Beispiel nur die Menüelemente 2 und 3 erfindungsgemäß ausgebildet sind. Des weiteren umfaßt das Grundmenü 1 eine Auswahlliste von Personen eines privaten Telefonbuchs, die in einem Speicher abgelegt sind. Ein Teil dieses privaten Telefonbuches ist auf dem Grundmenü 1 dargestellt, wobei jeder Person ein Listenfeld 5 zugeordnet ist. Weiter umfaßt das Grundmenü 1 einen Aktivierungsbalken 6 mit einem zugeordneten Eingabefeld 7, in dem ein piktogrammförmiger Telefonhörer abgebildet ist. Mittels eines weiteren Eingabefeldes 8 kann sich der Nutzer nach oben oder nach unten in der Auswahlliste mit dem Aktivierungsbalken 6 bewegen. Die Menüelemente 2 und 3 sind jeweils mit einem Zeigerelement 9 ausgebildet, das eine mögliche Bewegungsrichtung eines Menüträgers 10 anzeigt. Dabei zeigt das Zeigerelement 9 des Menüfeldes 2 nach rechts, weg von dem Menüelement 2, d.h. der Menüträger des Menüelementes 2 ist unter diesem angeordnet und gegenwärtig nicht dargestellt. Würde hingegen das Menüelement 2 aktiviert werden, so würde der Menüträger rechts neben dem Menüelement 2 angeordnet werden. Dies ist für das Menüelement 3 dargestellt. Das Zeigerelement 9 des Menüelementes 3 zeigt zum Menüelement 3 hin, d.h. bei einer erneuten Betätigung des Menüelementes 3 würde sich der Menüträger10 von rechts wieder unter das Menüelement 3 bewegen. Auf dem Menüträger 10 sind vier Menüelemente 11-14 angeordnet, die die Eingabeoptionen der dem Menüelement 3 untergeordneten Menüebene bilden. Dabei wird die aktuell aktivierte Eingabeoption, im dargestellten Beispiel das Menüelement 12, optisch hervorgehoben. Durch Betätigung eines der Menüelemente 11-14 kann der Nutzer die Auswahlliste ändern und nach erfolgter Änderung durch Betätigung des Menüelementes 3 den Menüträger 10 wieder einfahren.

Vorzugsweise wird die Anzeigeeinheit, auf der das Grundmenü 1 dargestellt wird, als Touch-Screen ausgebildet, so daß die Menüelemente 2-4, 11-14 und die Eingabefelder 7 und 8 als berührungssensitive Elemente ausgebildet werden können.

### BEZUGSZEICHENLISTE

- 1: Grundmenü auf einer Anzeigeeinrichtung
- 2: Menüelement
- 3: Menüelement
- 4: Menüelement
- 5: Listenfeld
- 6: Aktivierungsbalken
- 7: Eingabefeld
- 8: Eingabefeld
- 9: Zeigerelement
- 10: Menüträger
- 11: Menüelement
- 12: Menüelement
- 13: Menüelement
- 14: Menüelement
- 15: Anzeigeeinrichtung

## Patentansprüche

1. Multifunktionsbedieneinrichtung für Kraftfahrzeuge mit mindestens einer Anzeigeeinrichtung (15), mit einem Menüelement (2, 3) für eine hierarchische Benutzerführung in menügesteuerten Systemen, wobei dem Menüelement (2, 3) mindestens ein hierarchisch untergeordneter Menüträger (10) zugeordnet ist, auf dem mindestens ein hierarchisch untergeordnetes Menü- und/oder Funktionselement (11 - 14) angeordnet ist, wobei bei Aktivierung des Menüelementes (2, 3) der Menüträger (10) in Bezug zum Menüelement (2, 3) dargestellt ist, wobei im nicht aktivierten Zustand des Menüelementes (2, 3) der Menüträger (10) eingefahren und nicht dargestellt ist und im aktivierten Zustand des Menüelementes (2, 3) der Menüträger (10) ausgefahren und neben oder um das Menüelement (2, 3) angeordnet ist,
**dadurch gekennzeichnet, dass**
auf dem Menüelement (2, 3) mindestens ein Zeigerelement (9) angeordnet ist, das eine mögliche Bewegungsrichtung des Menüträgers (10) anzeigt, wobei im nicht aktivierten Zustand des Menüelements das Zeigerelement (9) vom Menüelement (2, 3) wegzeigt, und im aktiven Zustand des Menüelements das Zeigerelement (9) zum Menüelement (2, 3) hinzeigt, und wobei bei einer erneuten Betätigung des aktivierten Menüelementes (2, 3) der Menüträger (10) wieder einfährt.

2. Menüelement nach Anspruch 1,
**dadurch gekennzeichnet, dass** der Menüträger (10) als Leiste ausgebildet ist, die horizontal oder vertikal zu dem Menüelement (2, 3) bewegbar ist.

3. Multifunktionsbedieneinrichtung nach Anspruch 1 oder 2,
**dadurch gekennzeichnet, dass** das aktivierte Menüelement (2, 3) und/oder aktivierte Menü- und/oder Funktionselemente (11 - 14) des Menüträgers (10) optisch hervorgehoben dargestellt ist.

## Claims

1. Multifunction control device which is intended for motor vehicles having at least one display device (15) and has a menu element (2, 3) for hierarchical user guidance in menu-driven systems, the menu element (2, 3) having at least one associated hierarchically subordinate menu carrier (10) on which at least one hierarchically subordinate menu and/or function element (11 - 14) is arranged, the menu carrier (10) being displayed for the menu element (2, 3) when the latter is activated, the menu carrier (10) being retracted and not displayed when the menu element (2, 3) is in the non-activated state, and being extended and arranged next to or around the menu element (2, 3) when the latter is in the activated state,
**characterized in that**
at least one pointer element (9), which indicates a possible direction of movement for the menu carrier (10), is arranged on the menu element (2, 3), the pointer element (9) pointing away from the menu element (2, 3) when the latter is in the non-activated state, and pointing towards the menu element (2, 3) when the latter is in the active state, and the menu carrier (10) retracting again when the activated menu element (2, 3) is actuated once again.

2. Multifunction control device according to Claim 1,
**characterized in that** the menu carrier (10) is in the form of a bar which can move horizontally or vertically with respect to the menu element (2, 3).

3. Multifunction control device according to Claim 1 or 2,
**characterized in that** the activated menu element (2, 3) and/or activated menu and/or function elements (11 - 14) associated with the menu carrier (10) is/are displayed in a visually emphasized manner.

## Revendications

1. Dispositif de commande multifonction pour des véhicules automobiles avec au moins un dispositif d'affichage (15), avec un élément à menus (2, 3) pour un guidage hiérarchique de l'utilisateur dans des systèmes contrôlés par menus, un champ de menus (10) hiérarchiquement subordonné au moins étant attribué à l'élément de menus (2, 3), sur lequel est disposé au moins un élément de menus et/ou un élément de fonctions (11 - 14) hiérarchiquement subordonné, l'activation de l'élément de menus (2, 3) entraînant l'affichage du champ de menus (10) en rapport avec l' élément de menus (2, 3), l'élément de menus (2, 3) du champ de menus (10) étant rétracté et non représenté dans l'état non activé et le champ de menus (10) étant déployé et disposé à côté ou autour de l'élément de menus (2, 3) dans l'état activé de l'élément de menus (2, 3), **caractérisé en ce qu'**au moins un élément indicateur (9) est disposé sur l'élément de menus (2, 3) pour indiquer un sens de déplacement possible du champ de menus (10), l'élément indicateur (9) pointant vers l'extérieur de l'élément de menus (2, 3) dans l'état non activé de l'élément de menus et l'élément indicateur (9) pointant vers l'élément de menus (2, 3) dans l'état activé de l'élément de menus et le champ de menus (10) se rétractant à nouveau lors d'une nouvelle action sur l'élément de menus (2, 3) activé.

2. Élément de menus selon la revendication 1, **caractérisé en ce que** le champ de menus (10) est réalisé en forme de bande pouvant se déplacer horizontalement ou verticalement par rapport à l'élément de menus (2, 3) .

3. Dispositif de commande multifonction selon la revendication 1 ou 2, **caractérisé en ce que** l'élément de menus (2, 3) activé et/ou les éléments de menus et/ou de fonctions (11 - 14) du champ de menus (10) sont représentés de manière à ressortir optiquement.
